# EUROPEAN PATENT APPLICATION

(11) **EP 2 679 435 A1**
(43) Date of publication of application: **01.01.2014**
(21) Application number: 12173443.8
(22) Date of filing: 25.06.2012
(51) Int. Cl.: B60L 7/10, B60L 11/18

(54) **Method and arrangement for charging an electrical energy storage and a vehicle with such an arrangement**

(71) Applicant: Paraska Holdings Limited, 1082 Nicosia (CY)
(72) Inventor: The designation of the inventor has not yet been filed
(74) Representative: Gulde Hengelhaupt Ziebig & Schneider

(57) **Abstract**

The present invention concerns a method and an arrangement for charging an electrical energy storage as well as a vehicle with such an arrangement, which is usable for charging a battery of a vehicle broken down due to empty battery without the need of an electric charging point.

For this purpose a method is proposed for charging an electrical energy storage of a first vehicle, where the electrical energy storage is charged during the first vehicle is set in motion by at least a second vehicle, where motive power of the second vehicle is converted into electricity by a traction inverter of the first vehicle

## Description

The present invention concerns a method and an arrangement for charging an electrical energy storage as well as a vehicle with such an arrangement, which is usable for charging a battery of a vehicle broken down due to empty battery without the need of an electric charging point.

If a driver runs out of fuel in a conventional combustion engined vehicle they can normally recover the vehicle by bringing fuel to the vehicle in a container. In an Electric Vehicle (EV) this is not possible so the vehicle must always be towed or moved to the nearest electric charging point.

Most EVs have the ability to regenerate some power into the battery during braking, however the battery is actually in a discharge state so may not be able to accept significant charge.

It is an object of the invention to provide a method and an arrangement for charging an electrical energy storage as well as a vehicle with such an arrangement, which obviates the disadvantages of the conventional solutions, and which more particularly provides improved re-starting after discharge of the battery of an EV.

The object is solved with the invention by the features in claims 1, 12 and 13. Advantageous embodiments of the invention are recited in the dependent claims

According to one aspect of the invention, an arrangement is provided which at least comprises means for controlling charging of an electrical energy storage, such as a traction battery, for example a battery of an electric vehicle. According to the invention, the arrangement is configured in such a way that the electrical energy storage is charged during the first vehicle is set in motion by at least a second vehicle. During the first vehicle is set in motion with the help of the second vehicle, the motive power of the second vehicle is converted into electricity by a traction inverter of the first vehicle. While the second vehicle the first vehicle sets in motion, for example by towing or pushing, the wheels of the first vehicle are set in motion and transmit the motion via the drive mechanism of the first vehicle the motive power of the second vehicle to the electric motor of the first vehicle. The traction inverter is connected with the electric motor and generates a regenerative power which is used for charging the electrical energy storage. Thus, the arrangement is configured in such a way that a method for charging the electrical energy storage of the first vehicle is executable.

According to another aspect of the invention, a method for charging an electrical energy storage of a first vehicle is provided, where the electrical energy storage is charged during the first vehicle is set in motion by at least a second vehicle, where motive power of the second vehicle is converted into electricity by a traction inverter of the first vehicle.

According to another aspect of the invention, a vehicle is provided, where the vehicle at least comprises an electrical energy storage, a traction inverter and the inventive arrangement for charging an electrical energy storage and a vehicle. Preferably, the vehicle is an electric vehicle or a hybrid electric vehicle (HEV), i.e. a vehicle which combines an internal combustion engine and one or more electric motors.

In a preferred embodiment of the invention the arrangement comprises means for charging the electrical energy storage while the first vehicle is set in motion by towing.

According to another preferred embodiment of the invention the arrangement comprises means for adjusting the regenerative power, which is provided from the traction inverter while the first vehicle is set in motion by the at least one second vehicle, to a value, which is higher than the value of the regenerative power for charging while braking.

In another preferred embodiment of the invention the arrangement comprises means for controlling regeneration during towing in the same way as a charger is controlled. It has been found advantageously that the arrangement comprises means for controlling current for charging according to battery charging requirements. Alternatively or additionally the arrangement comprises means for controlling current for charging with respect to towing properties. Advantageously, the current is controlled in such a way that easy towing of the first vehicle is enabled.

According to another preferred embodiment of the invention the arrangement comprises means for controlling the current for charging by inputting control signals by use of an accelerator pedal. In a preferred embodiment of the invention the arrangement comprises means for switching the regenerating current on or off depending from the position of the pedal. Advantageously, the arrangement comprises means for deciding whether the regenerating current is switched on or off according to a lookup table which comprises entries for positions of the accelerator pedal with corresponding switch states.

In just another preferred embodiment of the invention the arrangement comprises means for adjusting the regeneration power that the electrical energy storage is charged rapidly. Especially, the regeneration power is adjusted in such a way that towing for a first distance charges the electrical energy storage with such an amount of electrical energy that the first vehicle is enabled to drive with this amount of electrical energy for a second distance which is longer than distance which the first vehicle has been towed. In a preferred embodiment of the invention the means for adjusting the regeneration power is configured that the second distance is approximately five to ten times the first distance, preferably approximately eight times the first distance.

According to a preferred embodiment of the invention the arrangement is part of a battery management system or where the arrangement comprises a battery management system.

This invention relates to a special charging mode where the battery is also recharged during towing.

The invention provides a towing regeneration system, which sets a unique mode where the regeneration is controlled in the same way that a charger would be controlled. The battery is set into charging mode and the motive power from towing the vehicle is converted into electricity by the traction inverter. The magnitude of the regenerated current is controlled by the battery charging requirements but is also controlled to enable easy towing the electric vehicle or hybrid electric vehicle.

The features allow a fast recovery of an EV that has stopped with low or completely empty battery. Allowing fast recovery leads to the advantage that range anxiety may be reduced that EV customers may experience.

The invention enables a specific regeneration level which is controlled and optimized for towing at lower speeds to ensure fast recovery of a near empty battery. Thus, the invention goes beyond regeneration at "foot off" accelerator pedal and/or braking as provided as standard EV functionality.

Other features and advantages of the present invention will be more readily apparent upon reading the following description of currently preferred exemplified embodiments of the invention with reference to the accompanying drawing, in which:
FIG. 1 shows a flow chart of a sequence of steps executed by an exemplary arrangement and
FIG. 2 shows an exemplary control of the regeneration current.

The invention allows charging a vehicle's battery, especially while the vehicle is being towed. In contrast to conventional solutions, where energy is regenerated while braking, the battery is charged more rapidly by using the invention.

For drivability reasons the level of regeneration is typically low at low vehicle speeds, for example for speed of 0 to approximately 50 km/h. Allowing the battery to go into "chrge mode" ensures that the regenerative charge is properly controlled and limited by the battery. Further, the regenerative power can be increased from the normal drive mode regeneration level.

As an example, the typical consumption of an EV in urban traffic is approximately 100 Wh/km. Towing a car with increased regeneration level (for example approximately 25 kW) at a speed of approximately 30 km/h would regenerate about 800 Wh while towing for 1 km. This means that by towing the car for 1 km, one regenerate sufficient amount of energy to allow the vehicle to drive by itself another 8 km. This way an empty EV that has been left standing on the road can easily be towed only for a couple of minutes and can thereafter be driven "home". In a preferred embodiment, the distance, which the vehicle is enabled to drive by itself after having been towed, is approximately 5 to 10 times the towed distance. A preferred distance factor towing vs. driving is approximately 1 to 8.

The towing regen mode allow energy to be recovered into the battery approximately 10 times faster than while charging with a normal grid point utilizing 110V or 220V.

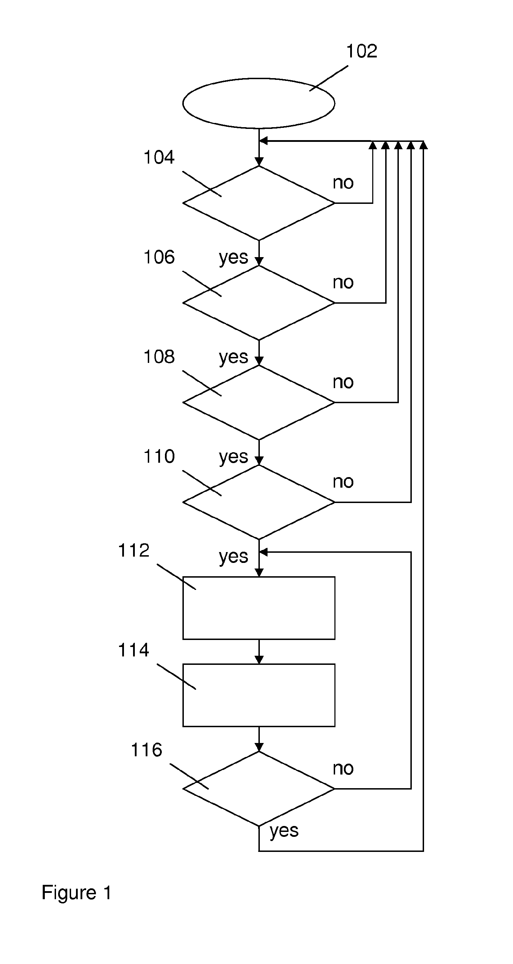

The function of an exemplary towing regeneration system is described with the help of figure 1.

The regeneration process is started in step 102. In step 104 it is checked whether a driver has turned the ignition key on and whether the driver presses a towing regeneration button. If the ignition key is turned on and the towing regeneration button is pressed at least for a presettable time, for example 5 sec, towing regeneration mode is initiated.

In step 106 it is checked whether the battery charge mode is enabled. In case the battery charge mode is enabled, the process proceeds to step 108, where it is checked whether the gear position is not in parking (P) and not in neutral (N) position.

If in step 108 decision is made that the gear position is in P or N position process proceeds to step 110 where it is checked whether all preceding conditions are fulfilled and whether the key is in start position. If this condition is fulfilled, the towing regeneration mode control is activated. Elsewise, if one of the preceding conditions is not met, the process returns to step 104 for verifying the conditions again.

After the towing regeneration mode control is activated, the vehicle controller (VCU) acknowledges this in step 112 by flashing a drive enable indicator rapidly. Then, the VCU in discharge mode controls the traction inverter to accomplish a driver demanded regeneration current. The vehicle operates as in normal drive mode but the accelerator pedal is only used to control switching the regeneration current on or off to enable smooth towing take off. Vehicle acceleration is in this case disabled. According to an alternative embodiment of the invention regeneration is controlled automatically. In this case, it is not necessary that the driver stays in the vehicle to be regenerated. For example, at a speed of 0 km/h to 10 km/h no regeneration is carried out, regeneration is started at a speed of 10 km/h and increased with a slow ramp-up curve until full regeneration at a speed of 50 km/h. During decelerating from 50 km/h to 10 km/h regeneration is decreased with a slow ramp-down curve to zero regeneration.

During the regeneration current is switched on, the battery is regenerated, in step 114, by utilizing closed loop motor control to optimize regeneration to achieve but not exceed battery charge current limitation.

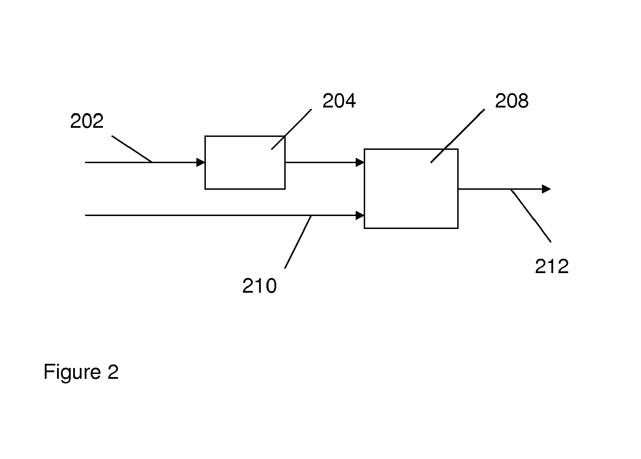

In Figure 2 an exemplary control of the regeneration current is depicted. For controlling the regeneration current the position 202 of the accelerator pedal is sensed. In a preferred embodiment the position can take values between 0 and 100%. The value of the position 202 of the accelerator pedal is used for determining from a lookup table 204 the driver DC regeneration current 206. The driver DC regeneration current 206 can take, in a preferred embodiment, also values between 0 and 100%. The driver DC regeneration current 206 is put in a comparator 208, which compares the driver DC regeneration current with a battery charge current limit 210, which is also put in the comparator 208. The comparator 208 takes the maximum of driver DC regeneration current 206 and battery charge current limit 210 as DC current 212, which is provided to the battery.

During charging the battery it is checked, in step 116, whether the ignition key is turned off. If it is decided that the ignition key is still turned on, the process goes to step 112 and continues charging according to the sensed position 202 of the accelerator pedal. Otherwise, if it is decided that the ignition key is turned off, charging is ended and the process goes back to step 104 and waits until the conditions of steps 104 to 108 are met.

While the invention has been illustrated and described in connection with currently preferred embodiments shown and described in detail, it is not intended to be limited to the details shown since various modifications and structural changes may be made without departing in any way from the spirit of the present invention. The embodiments were chosen and described in order to best explain the principles of the invention and practical application to thereby enable a person skilled in the art to best utilize the invention and various embodiments with various modifications as are suited to the particular use contemplated.

## Claims

1. Method for charging an electrical energy storage of a first vehicle, **characterized in that** the electrical energy storage is charged during the first vehicle is set in motion by at least a second vehicle, where motive power of the second vehicle is converted into electricity by a traction inverter of the first vehicle.

2. Method according to claim 1, where the first vehicle is set in motion by towing.

3. Method according to claim 1 or 2, where the regenerative power for charging while the first vehicle is set in motion by the at least one second vehicle is higher than the regenerative power for charging while braking.

4. Method according to one of the preceding claims, where regeneration during towing is controlled as a charger is controlled.

5. Method according to one of the preceding claims, where current for charging is controlled according to battery charging requirements and/or with respect to towing properties.

6. Method according to one of the preceding claims, where control of the current for charging includes inputting control signals by use of an accelerator pedal.

7. Method according to claim 6, where the regenerating current is switched on or off according to the position of the pedal.

8. Method according to claim 6 or 7, where switching regenerating current on or off is decided according to a lookup table.

9. Method according to one of the preceding claims, where the regeneration level is approximately 25 kW.

10. Method according to one of the preceding claims, where regeneration power is adjusted in such a way that charging while set in motion for a first distance by the at least one second vehicle generates an amount of energy which enable the first vehicle to drive by itself for a second distance, where the second distance is approximately five to ten times the first distance, preferably approximately eight times the first distance.

11. Method according to one of the preceding claims, where during the first vehicle is set in motion by at least a second vehicle the battery is set in a charging mode.

12. An arrangement for executing a method for charging the electrical energy storage according to one of claims 1 to 11.

13. A vehicle at least comprising an electrical energy storage, a traction inverter and an arrangement according to claim 12.

14. The vehicle according to claim 13, where the vehicle is an electric vehicle or a hybrid electric vehicle.
